# EUROPEAN PATENT SPECIFICATION

(11) **EP 0 342 237 B1**
(45) Date of publication and mention of the grant of the patent: **05.01.1994**
(21) Application number: 88906873.0
(22) Date of filing: 27.07.1988
(51) Int. Cl.: B29C 45/14, B29C 45/16, H05K 9/00, B29L 31/34

(54) **FLOATING INSERT MOLDING METHOD AND APPARATUS**
VERFAHREN UND VORRICHTUNG ZUM FORMEN MIT EINEM SCHWIMMENDEN EINSATZ
PROCEDE ET APPAREIL DE MOULAGE D'UN INSERT ISOLE DE LA TERRE

(30) Priority: 27.07.1987 JP 185575/87
(43) Date of publication of application: 23.11.1989
(73) Proprietor: KANEKO, Michio, Kanagawa 248 (JP)
(72) Inventor: KANEKO, Michio, Kanagawa 248 (JP)
(74) Representative: Haft, von Puttkamer, Berngruber, Czybulka
(86) International application number: JP8800749
(87) International publication number: WO8900911

(56) References cited:
- FR-A- 1 426 150
- GB-A- 2 103 534
- US-A- 3 619 458
- PATENT ABSTRACTS OF JAPAN, vol. 9, no. 288 (E-358)[2011], 15th November 1985;& JP-A-60 130 129 (NIPPON DENKI K.K.) 11-07-1985

## Description

### Technical Field:

This invention relates to a floating insert molding method and molding apparatus for molding integrally a core layer (which is referred to as a "floating insert") made of an electrically conductive material (metals, electrically conductive resins, etc.) having an electromagnetic shield property with inner and outer layers superposed on the inside and outside of the core layer and made of a synthetic resin or the like, whereby the resulting molded article is used as an electromagnetic shield case, for example, for covering electric appliances, components and devices for which electromagnetic shield is necessary as typified by high-frequency transformers.

### Background Art:

The following methods are known as the background art according to claim 1 for the floating insert molding method for molding a floating insert, especially an electromagnetic shielding case.
(1) Normal insert molding method in accordance with general injection and compression molding method (including the transfer molding method)
(2) Two-color molding method
(3) Sandwich molding method
(4) Method for sealing isolation-type semiconductor element with resin (JP-A-60-130129).

In the following description, a floating insert is defined as an insert which is led to a predetermined position in the space formed by opening a pair of molds for molding a melted material, directly received and held at the position only by the floating insert holders of the both molds, and transferred through the space to be secured at the predetermined floating-insert molding position, integrally molded with the melted material by closing the mold, and molded in as an inserted core, and an insert molding method using a floating insert is defined as a floating insert molding method.

A normal insert is defined as an insert which is directly placed or mounted on the parting line section or the surface of the molded-article-molding portion of one or more pairs of molds for molding a melted material by opening the molds before it is molded with the melted material by closing the molds. An insert molding method using a normal insert is defined as a normal insert molding method.

The method (1) is a method in which two injection molding machines or two compression molding machines (including a transfer molding machine) for general purpose or locally remodelled for special purpose (hereafter referred to as general-purpose molding machine) and two pairs of molds are used, one side of a prepared core-layer part (made of metal, snyhtetic resin or the like) is covered with synthetic resin by the first general-purpose molding machine and a mold and provided with normal insert molding to obtain a molded part consisting of a core layer and a one-sided synthetic resin layer by using the preapred core-layer part as a normal insert, and the uncovered side of the core layer is covered with the synthetic resin same as the first molded layer or different synthetic resin by the second general-purpose molding machine and a mold and provided with normal insert molding to obtain a desired molded part.

The method (2) is a method in which one two-color molding machine and two pairs of molds are used. A core layer material (only conductive synthetic resin can be used but no metal can be used) is molded so that it is overlapped with the mold by using the molded synthetic resin part of a prepared one layer (one of the outer layer or inner layer) as a normal insert to obtain a desired two-layer molded part, the mold is opened and the mold section is rotated or moved by a rotating or moving mechanism with the two-layer molded part attached to the attaching section (core, cavity or stripper plate) to correspond to the second mold, and the two-layer molded part is covered with the material same as the first prepared molded synthetic resin or different synthetic resin and provided with normal insert molding by using the two-layer molded part as a normal insert to obtain a desired molded part.

Because a three-color molding machine is developed, the above-mentioned prepared molded one-layer synthetic resin part is molded in the machine to subsequently perform the above two-color molding. In this case, three pairs of molds are necessary.

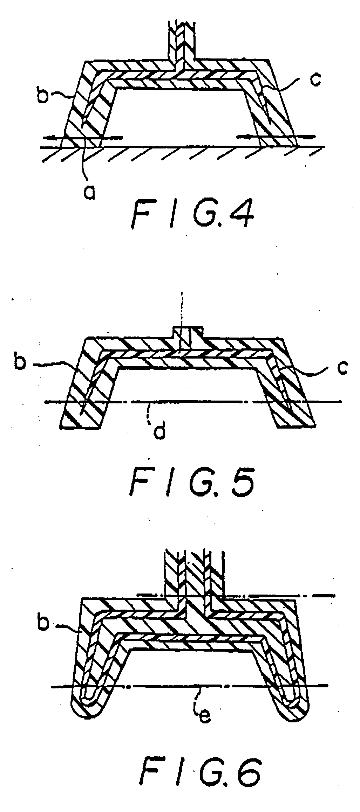

The method (3) is a method in which one sandwich molding machine and a pair of molds are used, one type of covered-layer (to serve as outer and inner layers) synthetic resin is first fed to the molded-article-molding portion of the mold and feed of the resin is stopped at the predetermined amount before core layer material (only conductive synthetic resin can be used but no metal can be used) is further fed into the covered-layer synthetic resin in molded-article-molding portion to entirely cover the core layer with the covered layer and then provided with fabrication in order to eliminate electromagnetic leak as shown in Figs. 4, 5 and 6 to obtain a desired molded part.

The method (4) is a method in which one general-purpose molding machine described in the method (1) and a pair of molds are used. A normal insert (lead frame having semiconductor elements) is normal-insert-molded (closure-molded) by securing one end of the normal insert at the parting line section of the molds and supporting the both sides of the other end of the normal insert with movable support pins, and the support pins at the both sides are moved back and forth by signals sent from a pressure sensor in the molded-article-molding portion when the pressure reaches a set value lower than the predetermined value during molding to control the attitude of portions other than the portion where the normal insert is secured before the support pins at the both sides are evacuated from the molded-article-molding portion to finish the normal insert molding (closure molding).

### Evaluation of background art

These four methods (1) to (4) cannot completely meet the following four requirements for the method for molding a desired electromagnetic shielding case: (A) a molded part free from electromagnetic leak should be obtained. (B) a molded part with a low cost should be obtained. (C) a molded part with inner and outer layers made of different materials should be obtained in view of electromagnetic and economic reasons. (D) an obtained molded part should be safe and heavy-duty and quality control techniques can completely and easily be applied to the molded part.

The following are the reasons why the four methods cannot completely meet the four requirements.

The method (1) increases the cost of a molded part because it uses two machines and two pairs of molds and requires molding twice.

The method (2) also increases the cost of a molded part because it uses one machine and two pairs of molds and substantially requires molding twice though the molding is performed by the same machine. Moreover, because no metal can be used for the material of the core layer, it should be considered that the design for the electromagnetic shielding performance of the molded part is restricted.

The method (3) only provides a molded part with the inner and outer layers made of the same material and the molded part requires fabrication to eliminate electromagnetic leak. Therefore, the cost of the molded part increases and its quality control is not easy. Moreover, the core layer material cannot use metal.

The method (4) is a normal insert molding method using only one type of synthetic resin as described above. Therefore, no desired molded part can be obtained.

For the method (4), it is possible to control the attitude of a cantilever-type normal insert whose one end is directly held by molds by deforming the other end of the insert by driving the longitudinally-movable pins supporting the other end of the insert at the both sides while injection molding is applied to the molding resin, a certain amount of resin is injected into the molded-article-molding portion, and the end of the normal insert is enclosed by a certain amount of resin. However, the method (4) is completely different from the method of the present invention for correctly holding a floating insert at a predetermined molding position during molding.

For the method (4), it is easy and already executed to remove the pins for holding a normal insert at the both sides of the insert from the molded-article-molding portion, when the pressure reaches a set value lower than the predetermined molding pressure.

The basic technique of the method (4) is known as the insert technique for making a large ball or thick flat plate in the casting of iron or the like, which is called the leaving-core-technique or placed-internal core technique in various molding methods of synthetic resin.

### Disclosure of Invention

The present invention relates to a method for molding a floating insert, especially an electromagnetic shielding case and an apparatus for executing the molding method which completely meets the previously-mentioned four requirements.

The method is a floating insert molding method which uses a molding machine having a fixed-side mold A, set to a fixed board and a movable-side mold B which is fixed to a movable board and pairs with the fixed-side mold A, positions a semiconductor element or the like in the space between the both molds, and seals it with resin to integrate the semiconductor element with resin; and which comprises the steps of bringing a previously-molded floating insert C into the space between the molds A and B formed by moving and opening the movable-side mold B, holding the molded floating insert C brought by a fixed-side floating-insert holder and a movable-side floating-insert holder before completely closing the molds A and B, feeding a material to spaces 14 and 15 between the floating insert C held only by the fixed- and movable-side floating insert holders 6 and 11 and the both molds A and B from the mold A and mold B respectively through melted material feed channels 16 and 17 by the fixed- and movable-side melted material feeders 2 and 4, filling the spaces 14 and 15 between the floating insert C and the both molds A and B with the melted material, and integrating the filled material with the floating insert C.

This method makes it possible to (1) obtain a molded part free from electromagnetic leak, (2) obtain a desired molded part with one molding machine and a pair of molds through molding once and decrease the cost of the molded part after fabrication, (3) obtain a molded part with inner and outer layers made of different materials, and (4) obtain a safe and heavy-duty molded part to which quality control can completely and easily be applied.

The floating insert molding machine comprises a melted material feed section which functions adaptively to a fixed-side melted material feeder, a fixed-side molded floating-insert holder, a fixed-side knocking-out apparatus for knocking out a molded floating insert to a predetermined position from a fixed-side mold A after floating insert molding is completed, a fixed-side molded floating-insert holder/knocking-out apparatus, a fixed-side mold A having a movable-side material feed-pressure measuring apparatus and a fixed-side mold internal-pressure measuring instrument, a melted material feed section which functions adaptively to a movable-side melted material feeder integrated with a movable board, and a movable-side mold B having a movable-side molded floating-insert holder, a fixed-side material feed-pressure measuring apparatus, and movable-side mold internal-pressure measuring instrument.

### Brief Description of Drawings:

Fig. 1 shows the apparatus used for practising the method of the present invention and shows the state where the mold is open;
Fig. 2 shows the state where the mold is closed;
Fig. 3 shows the state where molten materials are supplied to both sides of the floating-insert and integrated; and
Fig. 4 and 5 are explanatory views of a conventional molding method.

### Best Mode for Carrying Out the Invention:

Hereinafter, the embodiment shown in the drawing will be described. Symbol A represents a mold on the stationary side which is mounted to a stationary platen 1 and B is a mold on the moving side which is mounted to a moving platen 3. The moving apparatus in accordance with the present invention consists of the mold A on the stationary side and the mold B on the moving side. A molten material is supplied to the mold A on the stationary side from a molten material feeder 2 through the stationary platen 1 and a molten material feeder portion 16 and to the mold B on the moving side from a molten material feeder 4 on the moving side assembled in strong pressure contact with the moving platen 3 and moving integrally therewith, through a molten material feeder portion 17.

The mold A on the stationary side includes the molten material feeder portion 16 on the stationary side described above, a Material supply pressure gauge 5 on the moving side, a floating insert holder 6 on the stationary side, a mold internal pressure gauge 7 on the stationary side, a floating-insert holder/knock-out device 8 on the stationary side, a knock-out device 9 on the stationary side and other necessary components or devices not shown in the drawing.

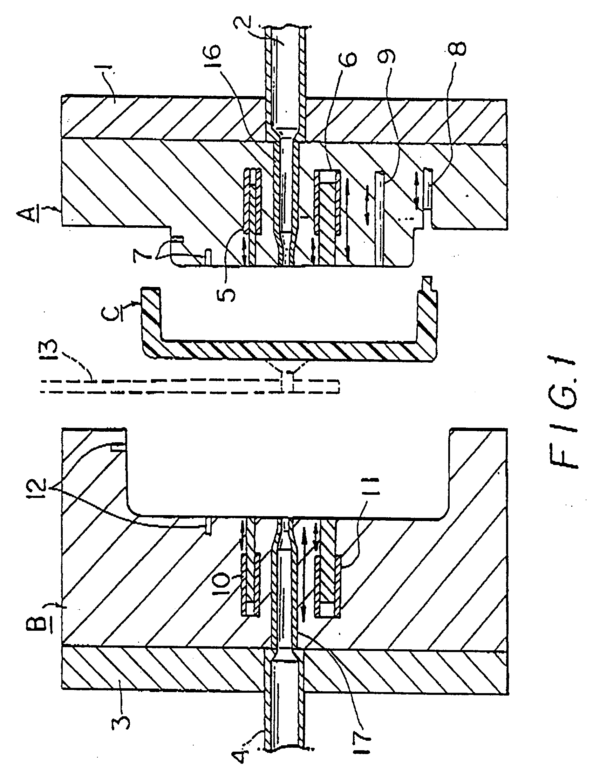

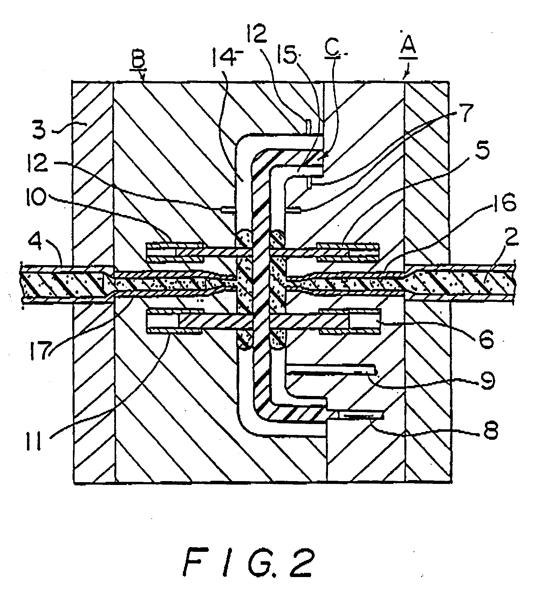

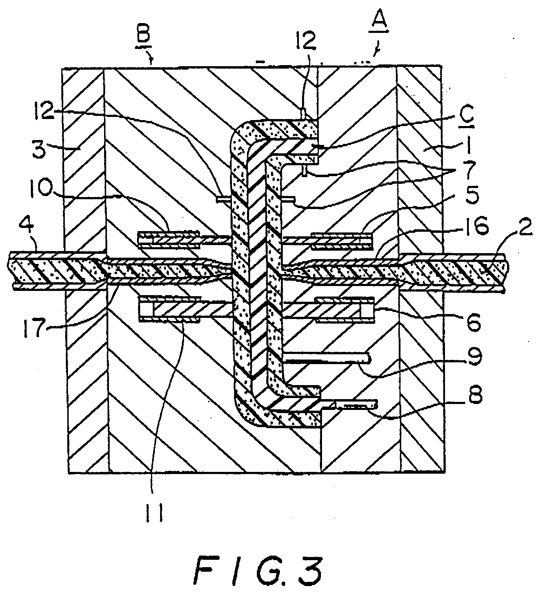

The mold B on the moving side includes the molten material feeder portion 17 on the moving side, a material supply pressure gauge 10 on the stationary side, a floating-insert holder 11 on the moving side, a mold internal pressure gauge 12 on the moving side and other necessary components or devices not shown in the drawing.
1) While the molds A and B are completely open as shown in Fig. 1, a floating insert C which is produced either in the interlocking arrangement with this system or separately is held in place at the lead-in position in the space between the molds A and B determined accurately by a floating insert conveyor means 13 such as a robot.
2) The floating-insert C is fixed and held accurately at the lead-in position by moving forth the tip of the floating-insert holder 6 on the stationary side (inclusive of the floating insert holder/knock-out device 8 on the stationary side) and the tip of the floating-insert holder 11 on the moving side.
3) The conveyor means 13 which supplies the floating-insert C is moved completely away from between the molds A and B.
4) The molded floating insert C held only by the floating-insert holders 6 and 11 is transferred to the predetermined floating-insert molding position and stopped and held there while the molds A and B are fully opened or are closing. The molds A and B are fully closed (Fig. 2).
5) The measuring portions at the tips of the material supply pressure gauges 10 and 5 on the stationary and moving sides are moved forth and brought into close contact with the measuring surfaces of the floating-insert C.
6) A predetermined amount of the molten material is supplied at a predetermined pressure into the molds from the molten material feeders 2 and 4 on the stationary and moving sides.
7) If the material supply pressure gauges 10,5 on the stationary and moving sides detect the unallowable difference in the timing and pressure in the supply of the molten material between the stationary side and the moving side due to other factors at the initial stage of the molding cycle, the data is simultaneously fed fack to the molten material feeders 2, 4 so as to regulate them and to supply the molten material in the predetermined quantity and at the predetermined pressure into right and left space portions 14, 15 between the molds A and B that are divided by the floating-insert C.
8) If the mold internal pressure gauges 7, 12 disposed at the suitable positions inside the molds detect an impermissible difference between the internal pressures of the stationary and moving sides at an intermediate stage of the molding cycle, the data is simultaneously fed back to the molten material feeders 2,4 so as to correct the difference.
9) If the material supplied into the two spatial portions 14, 15 between the molds A and B divided by the floating-insert C reaches the predetermined quantity from the initial stage to the intermediate stage of the molding cycle and if the quantity is judged as being proper by the data that are fed back continuously, the tips of the floating-insert holders 6, 11 on the stationary and moving sides and those of the material supply pressure gauges 5, 10 are moved back away from the floating-insert C and are stopped on the same plane as the smooth surface portion of each mold (Fig. 3).
10) The material is further supplied and pressurization is effected from the intermediate stage to the latter stage of the molding cycle in order to finish the molding cycle.
11) In this manner, there is obtained a multi-layered, different-material molded floating-insert having the smooth surface on both the outermost surface and the innermost surface.

Since the present invention is executed as described above, the floating-insert which is produced in advance is positioned inside the molds, is then contained (as molded-insert) by the molds on the stationary and moving sides, the space is defined between the floating-insert and both molds on the stationary and moving sides, and the molten materials are supplied into the space from both sides to make integral molding. Accordingly, in the floating-insert molded article, particularly in molded articles of electromagnetic shielding casings, it becomes now possible.
1) to make electromagnetic leakage zero and hence to eliminate secondary work;
2) to use mutually different materials for a plurality of layers that has been required from the electromagnetic and economical aspects; and
3) to obtain safe and rigid products and to easily apply quality management methods.

### Industrial Applicability

As described above, the present invention makes it possible to integrally mold a core layer made of a conductive material having electromagnetic shielding performance with inner and outer layers made of synthetic resin put on the inside and outside of the core layer. Therefore, it is possible to provide a desired molded electromagnetic shielding case at a high quality and proper price. Thus, the present invention is geatly effective for decrease or prevention of electromagnetic faults. Moreover, the present invention can be applied not only to the industrial field of electrical appliances requiring electromagnetic shielding such as a high-frequency transformer but to many industrial fields of optical overlapped lenses, ceramic laminates, and metal laminates because the present invention makes it possible to form a meltable material materially and physically different from a core layer or core directly on the both sides or the entire surface of the core layer or core with a desired area, depth and shape.

## Claims

1. A floating insert molding method in a molding apparatus comprising a mold (A) on the stationary side mounted to a stationary platen has a floating insert holder positioned inside the molded article molding portion of the mold (A), and a mold (B) paired with the mold (A) on the moving side mounted to a moving platen has a floating insert holder positioned inside the molded article molding portion of the mold (B), and a melted material feeder on the stationary side and a melted material feeder strongly assembled to the moving platen on the moving side; characterized in that a previously produced floating insert (C) held at a predetermined position only by floating insert holders on both sides during molding and serving as an inserted core after molding is introduced and set to the predetermined position of the space between said pair of molds (A and B) formed by moving and opening the mold (B) and it is received and held at said position only by floating insert holders on both sides and moved to the predetermined floating insert molding position in said state of holding, and mold (A) on the stationary side and mold (B) on the moving side are completely closed, and the melted material is fed by the melted material feeder on the stationary side through the melted material feeding portion of the mold (A) to fill the space between the surface of the molded article molding portion of the mold (A) and the surface of the stationary side of floating insert (C), and the melted material is fed at the same time when the melted material on the stationary side is fed by the melted material feeder on the moving side through the melted material feeding portion of the mold (B) to fill the space between the surface of the molded article molding portion of the mold (B) and the surface of the moving side of floating insert (C), and floating insert (C) is completely molded in the melted materials in said spaces as an inserted core.

2. A floating insert molding apparatus comprising a mold (A) on the stationary side mounted to a stationary platen has a floating insert holder on the stationary side, and a knock-out device for knock-out molded product from a mold (A) on the stationary side after floating insert molding is completed, and a floating insert holder used both as knock-out device on the stationary side, and a melted material feeding pressure gauge on the stationary side whose tip directly contacts the stationary side surface of a floating insert (C) for measurement, and a melted material pressure direct gauge positioned in the molded article molding portion of mold (A), and a melted material feeding portion where the melted material feed through to the molded article molding portion from the melted material feeder on the stationary side,
and a mold (B) on the moving side mounted to a moving platen has a floating insert holder on the stationary side, and a melted material feeding pressure gauge on the moving side whose tip directly contacts the moving side surface of a floating insert (C) for measurement, and a melted material pressure direct gauge positioned in the molded article molding portion of mold (B), and a melted material feeding portion where the melted material feed through to the molded article molding portion from the melted material feeder on the moving side,
and a melted material feeder on the stationary side, and a melted material feeder strongly assembled to the moving platen on the moving side.

## Patentansprüche

1. Verfahren zum Formen mit einem schwimmenden Einsatz in einer Formvorrichtung, die ein feststehendes Formteil (A) aufweist, das mit einem feststehenden Preßstempel verbunden ist und die mit einem verschiebbaren Einsatzhalter versehen ist, der sich innerhalb des Formteils (A) für den zu formenden Gegenstand befindet und ein an das Formteil (A) angepaßtes bewegliches Formteil (B) aufweist, das mit einem beweglichen Preßstempel verbunden ist und das mit einem verschiebbaren Einsatzhalter versehen ist, der sich innerhalb des Formteils (B) befindet und mit einer Zufuhranordnung für geschmolzenes Material auf der feststehenden Seite und mit einer Zufuhranordnung für geschmolzenes Material, die fest mit dem beweglichen Preßstempel auf der beweglichen Seite verbunden ist, dadurch gekennzeichnet, daß ein vorher hergestellter schwimmender Einsatz (C) an einer vorgegebenen Stelle während des Formens ausschließlich durch die auf beiden Seiten vorgesehenen verschiebbaren Einsatzhalter gehalten wird und dabei als Kern dient zur Beschichtung durch Einfüllen und Absetzen einer Formmasse in dem Raum zwischen den beiden Formteilen (A und B), der nach dem Öffnen der Formteile, dem Einbringen des schwimmenden Einsatzes, dem Anordnen an der richtigen Stelle, dem Festhalten durch die verschiebbaren Einsatzhalter zu beiden Seiten und dem vollständigen Schließen der Formteile durch Verschieben des beweglichen Formteils (B) in Richtung zum feststehenden Formteil (A) entsteht, wonach das geschmolzene Material durch die Zufuhranordnung des Formteils (A) für geschmolzenes Material auf der feststehenden Seite und durch deren Vorderabschnitt in den Raum zwischen der Oberfläche des dem zu formenden Gegenstand zugewandten Formteils (A) und der Oberfläche des ihr zugewandten schwimmenden Einsatzes (C) eingefüllt wird und zugleich geschmolzenes Material durch die Zufuhranordnung für geschmolzenes Material des Formteils (B) und durch deren Vorderabschnitt in den Raum zwischen der Oberfläche des dem zu formenden Gegenstand zugewandten Formteils (B) und der Oberfläche des ihr zugewandten schwimmenden Einsatzes eingefüllt wird, wodurch der schwimmende Einsatz (C) vollständig mit geschmolzenem Material in Form eines Kerns in dem ihn umgebenden Raum beschichtet wird.

2. Vorrichtung zum Formen mit einem schwimmenden Einsatz, die ein Formteil (A) auf der feststehenden Seite aufweist, das mit einem feststehenden Preßstempel verbunden ist, mit einem verschiebbaren Einsatzhalter auf der feststehenden Seite, mit einer Auswurfanordnung zum Auswerfen eines geformten Gegenstandes aus dem Formteil (A) auf der feststehenden Seite, nachdem das Formen des schwimmenden Einsatzes beendet worden ist, mit einem verschiebbaren Einsatzhalter, der auch als Auswurfanordnung auf der feststehenden Seite dient, mit einem Druckfühler für das geschmolzene Material auf der feststehenden Seite, dessen Spitze direkt die der feststehenden Seite zugewandte Oberfläche des schwimmenden Einsatzes (C) zu Meßzwecken berührt, mit einem direkten Meßfühler für das geschmolzene Material im Formteil (A) und mit einer Zufuhranordnung für geschmolzenes Material, welche durch einen Vorderabschnitt verlängert ist auf der feststehenden Seite und
einem Formteil (B) auf der beweglichen Seite, das mit einem beweglichen Preßstempel verbunden ist, der einen verschiebbaren Einsatzhalter aufweist, mit einem Meßfühler auf der beweglichen Seite für die Vorschubmessung von geschmolzenem Material, dessen Spitze die bewegliche Oberfläche des schwimmenden Einsatzes (C) zu Meßzwecken berührt und einen Meßfühler zur Direktmessung des geschmolzenen Materials, der im Formteil (B) angeordnet ist sowie mit einer Zufuhranordnung für das geschmolzene Material, an das sich ein Vorderabschnitt anschließt zur Zufuhr von geschmolzenem Material in den Raum zwischen den beiden Formteilen (A und B), wobei die eine Zufuhranordnung für das geschmolzene Material auf der feststehenden Seite vorgesehen ist und die andere Zufuhranordnung für das geschmolzene Material auf der beweglichen Seite vorgesehen und fest mit dem beweglichen Preßstempel verbunden ist.

## Revendications

1. Procédé de moulage avec un insert flottant dans un appareil de moulage comprenant une partie de moule fixe (A) montée sur un plateau de compression fixe, avec un support d'insert réglable positionné à l'intérieur de la portion de moulage de la partie de moule (A), et une partie de moule mobile (B), appariée à la partie de moule (A), montée sur un plateau de compression mobile avec un support d'insert réglable positionné à l'intérieur de la portion de moulage de la partie de moule (B), et un appareil d'alimentation en matériau fondu sur le côté fixe et un appareil d'alimentation en matériau fondu solidement fixé au plateau de compression mobile sur le côté mobile; caractérisé en ce qu'un insert flottant (C) produit préalablement, destiné à être maintenu dans une position prédéterminée uniquement par les supports d'insert réglables sur les deux côtés durant le moulage et servant de noyau après le moulage, est introduit et positionné d'une façon prédéterminée dans l'espace entre les deux parties de moule (A et B) constitué en déplaçant et en ouvrant le moule (B), et en ce que l'insert flottant est reçu et maintenu dans ladite position uniquement par les supports d'insert réglables sur les deux côtés, jusqu'à la complète fermeture du moule par déplacement de la partie de moule mobile (B) dans la direction de la partie de moule fixe (A), en ce que le matériau fondu est introduit au moyen de l'appareil d'alimentation en matériau fondu disposé sur le côté fixe à travers la portion d'alimentation en matériau du moule (A) pour remplir l'espace entre la surface de la partie de moule (A) destinée au moulage de l'objet et la surface du côté correspondant de l'insert flottant (C), et en ce que simultanément le matériau fondu est introduit au moyen de l'appareil d'alimentation en matériau fondu disposé sur le côté mobile à travers la portion d'alimentation en matériau fondu de la partie de moule (B) pour remplir l'espace entre la surface de la partie de moule (B) destinée au moulage de l'objet et la surface correspondante de l'insert flottant (C) et en ce que l'insert flottant (C) est complètement noyé dans le matériau fondu dans l'espace constitué, à la façon d'un noyau.

2. Appareil de moulage avec un insert flottant comprenant une partie de moule (A) sur le côté fixe, monté sur un plateau de compression fixe, avec un support d'insert flottant sur le côté fixe, un dispositif éjecteur pour éjecter le produit moulé de la partie de moule (A) sur le côté fixe, lorsque le moulage avec insert flottant est terminé, un support d'insert flottant utilisé également comme dispositif éjecteur sur le côté fixe, un capteur de mesure de la pression d'alimentation en matériau fondu sur le côté fixe, dont l'extrémité est en contact direct avec la surface de l'insert flottant (C) du côté fixe, un capteur direct de la pression du matériau fondu positionné dans la portion de moulage de l'objet à mouler de la partie de moule (A), une portion d'alimentation en matériau fondu disposée sur le côté fixe, où débouche le matériau fondu provenant d'un appareil d'alimentation en matériau fondu, une partie de moule (B) sur le côté mobile montée sur un plateau de compression mobile avec un support d'insert flottant, un capteur de mesure de la pression du matériau d'alimentation fondu sur le côté mobile, dont l'extrémité vient en contact direct avec la surface de l'insert flottant (C) du côté mobile, un capteur direct de la pression du matériau fondu positionné dans la portion de moulage de l'objet à mouler de la partie de moule (B), une portion d'alimentation en matériau fondu disposée sur le côté mobile, où débouche le matériau fondu provenant d'un appareil d'alimentation en matériau fondu, et un appareil d'alimentation en matériau fondu disposé sur le côté fixe et un appareil d'alimentation en matériau fondu solidement fixé sur le plateau de compression mobile du côté mobile.
